# EUROPÄISCHE PATENTANMELDUNG

(11) **EP 4 686 931 A1**
(43) Veröffentlichungstag der Anmeldung: **04.02.2026**
(21) Anmeldenummer: 25192073.2
(22) Anmeldetag: 28.07.2025
(51) Int. Cl.: G01M 9/06, G01M 9/08

(54) **FEDERVORRICHTUNG FÜR SCHWINGBEWEGUNGEN VON MODELLEN SOWIE WINDKANALTESTVORRICHTUNG MIT FEDERVORRICHTUNG**

(30) Priorität: 30.07.2024 DE 102024121618
(71) Anmelder: Deutsches Zentrum für Luft- und Raumfahrt e.V., 53227 Bonn (DE)
(72) Erfinder: Gawehn, Thomas, 51147 Köln (DE); Junnai, Zhai, 51147 Köln (DE); Miketta, Markus, 53844 Troisdorf (DE)
(74) Vertreter: dompatent

(57) **Zusammenfassung**

Federvorrichtung (1) für Schwingbewegungen von Modellen, vorzugsweise Windkanalmodellen, mit einer ersten Anschlussvorrichtung (3) zum Verbinden mit einer Testvorrichtung (110) und einer zweiten Anschlussvorrichtung (5) zum Verbinden mit einem Modell (120), mit einer Mittelachse (11) und mit mindestens einer Federeinrichtung (13) mit zwei biegebeanspruchten Federelementen (15), die mit ersten Enden (15a) mit der ersten Anschlussvorrichtung verbunden sind und mit zweiten Enden mit der zweiten Anschlussvorrichtung, wobei die ersten Enden (15a) voneinander beabstandet an der ersten Anschlussvorrichtung (3) angebracht sind und die zweiten Enden (15b) mit einem Rotationsachsenelement (17) der zweiten Anschlussvorrichtung (5) verbunden sind, wobei das Rotationsachsenelement (17) eine Rotationsachse (21) für eine relative Bewegung zwischen der ersten und der zweiten Anschlussvorrichtung (3,5) bildet, wobei die Rotationsachse (21) exzentrisch zu der Mittelachse (11) verläuft.

## Beschreibung

Die vorliegende Erfindung betrifft eine Federvorrichtung für Schwingbewegungen von Modellen sowie Windkanaltestvorrichtung mit Federvorrichtung.

Für die aerodynamische Charakterisierung von Luft- und Raumfahrzeugen werden experimentelle Untersuchungen in Windkanälen durchgeführt und zunächst statische und später dynamische Beiwerte möglichst für den gesamten Flugbereich bestimmt. Die statischen Beiwerte sind dimensionslose Kräfte und Momente, die auf das Fahrzeug aufgrund der Umströmung im Flug einwirken. Die dynamischen Beiwerte hingegen beschreiben die Reaktion des Fahrzeugs auf eine auftretende Störung, z. B. durch eine Windböe.

Häufig werden für die Untersuchungen an Luft- und Raumfahrzeugen Messsysteme eingesetzt, die in die Windkanalmodelle eingebaut werden und die Verbindung zwischen Modell und Halterung bilden. Für die Ermittlung statischer Beiwerte gibt es interne Kraftmesswaagen, die in Windkanalmodelle eingesetzt werden können.

Zur experimentellen Ermittlung dynamischer Beiwerte gibt es unterschiedliche Messmethoden, u. a. die Methode der freien Oszillation/Schwingung. Üblicherweise wird dafür eine Rotationsfeder mit nur einem einzigen Freiheitsgrad der Modellbewegung (Rotation um eine vorgegebene Achse) eingesetzt. Je nach Anwendungsfall kommen unterschiedliche Arten von Federn zum Einsatz.

Dynamische Beiwerte können nicht auf einen anderen Bezugspunkt umgerechnet, sondern müssen aus einer Schwingung um einen Bezugspunkt, der bei den vorbekannten Modellen auf der Mittelachse liegt, ermittelt werden. Deshalb wird die Feder so im Modell positioniert, dass ihre Rotationsachse durch den Bezugspunkt verläuft.

Die vorstehend beschriebenen Systeme gehören zum allgemeinen Kenntnisstand des Anmelders, beziehen sich jedoch nicht notwendigerweise auf einen vorveröffentlichten Stand der Technik.

Bei der zuvor beschriebenen dynamischen Messung werden Individuallösungen für jedes Windkanalmodell erstellt. Häufig müssen für die Ermittlung statischer und dynamischer Beiwerte oder bei der Ermittlung dynamischer Beiwerte um unterschiedliche Rotationsachsen unterschiedliche Windkanalmodelle verwendet werden, wodurch die Vergleichbarkeit von Messergebnissen möglicherweise beeinflusst wird.

Es hat sich ferner herausgestellt, dass insbesondere im Bereich von Hyperschallströmungen aufgrund der zum Teil recht schlanken Geometrien die herkömmlichen Windkanaltestvorrichtungen mit den entsprechenden Federvorrichtungen bei dynamischen Messungen bei Nick- oder Rollbewegungen unzureichend sind.

Es ist daher die Aufgabe der vorliegenden Erfindung, eine verbesserte Federvorrichtung für Schwingbewegungen von Modellen sowie eine Windkanaltestvorrichtung mit Federvorrichtung zur Ermittlung von dynamischen Beiwerten an einem Windkanalmodell zu schaffen, wobei die Ermittlung dynamischer Beiwerte verbessert ist.

Die erfindungsgemäße Federvorrichtung ist definiert durch die Merkmale des Anspruchs 1. Die erfindungsgemäße Windkanaltestvorrichtung mit Federvorrichtung ist definiert durch die Merkmale des Anspruchs 10.

Die erfindungsgemäße Federvorrichtung für Schwingbewegungen von Modellen, vorzugsweise Windkanalmodellen, weist eine erste Anschlussvorrichtung zum Verbinden mit einer Testvorrichtung und eine zweite Anschlussvorrichtung zum Verbinden mit einem Modell, eine Mittelachse und mindestens eine Federeinrichtung mit zwei biegebeanspruchten Federelementen auf. Die Federelemente sind mit ersten Enden mit der ersten Anschlussvorrichtung verbunden und mit zweiten Enden mit der zweiten Anschlussvorrichtung, wobei die ersten Enden voneinander beabstandet an der ersten Anschlussvorrichtung angebracht sind und die zweiten Enden mit einem Rotationsachsenelement der zweiten Anschlussvorrichtung verbunden sind. Das Rotationsachsenelement bildet eine Rotationsachse für eine relative Bewegung zwischen der ersten und der zweiten Anschlussvorrichtung, wobei die durch das Rotationsachsenelement gebildete Rotationsachse exzentrisch zu der Mittelachse verläuft.

Im Zuge der Erfindung hat sich herausgestellt, dass dynamische Beiwerte bei Modellen, deren Schwerpunkt auf der Mittelachse liegt, mit herkömmlichen Testmethoden und mit konventionellen Rotationsfedern mit zentrischer Rotationsachse gut bestimmbar sind.

Insbesondere im Bereich von Hyperschallströmungen gibt es jedoch Anwendungsfälle, in denen der Schwerpunkt einer speziellen Modellgeometrie exzentrisch und beispielsweise sehr nah an einer Modellseitenwand liegt. Ein Einsatz von den konventionellen Rotationsfedern mit zentrischer Rotationsachse ist daher bei Nick- und Rollbewegungen nicht oder nur beschränkt möglich, da der Schwerpunkt nicht als gewünschter Bezugspunkt, durch den die Rotationsachse verläuft, verwendet werden kann.

Bei der erfindungsgemäßen Federvorrichtung verläuft jedoch die Rotationsachse exzentrisch zu der Mittelachse, so dass die erfindungsgemäße Federvorrichtung in vorteilhafter Weise für derartige Anwendungszwecke geeignet ist, da beispielsweise bei einer Anordnung der Federvorrichtung mit ihrer Mittelachse konzentrisch zu der Mittelachse des Windkanalmodells die Rotationsachse, um die eine Schwingung erfolgt, durch den exzentrischen Schwerpunkt oder nahe dem exzentrischen Schwerpunkt angeordnet werden kann.

Somit kann mittels der erfindungsgemäßen Federvorrichtung die Ermittlung dynamischer Beiwerte bei derartigen Anwendungsfällen deutlich verbessert werden.

Die Federvorrichtung kann dabei insbesondere in standardisierten Testvorrichtungen und Modellen Anwendung finden, in denen die Federvorrichtung mittels der ersten Anschlussvorrichtung mit der Testvorrichtung verbindbar ist, wobei die Federeinrichtung mit der Mittelachse koaxial zu der Mittelachse der Testvorrichtung angeordnet werden kann. Somit kann mit der gleichen Testvorrichtung und dem gleichen Modell sowohl die erfindungsgemäße Federvorrichtung als auch eine herkömmliche Federvorrichtung mit mittiger Rotationsachse verwendet werden. Dadurch, dass die gleiche Testvorrichtung mit unterschiedlichen Federeinrichtungen für unterschiedliche Anwendungsfälle verwendbar ist, sind die Testergebnisse relativ gut vergleichbar. Sowohl bei der Ermittlung statischer und dynamischer Beiwerte als auch bei der Ermittlung dynamischer Beiwerte um unterschiedliche Rotationsachsen können somit gut vergleichbare und somit gut auswertbare Messergebnisse erreicht werden.

Bei der erfindungsgemäßen Federvorrichtung kann auch grundsätzlich vorgesehen sein, dass die erste Anschlussvorrichtung mit dem Modell und die zweite Anschlussvorrichtung mit der Testvorrichtung verbindbar ist, die Federvorrichtung also um 180° verdreht angeordnet wird.

Vorzugsweise ist vorgesehen, dass die biegebeanspruchten Federelemente Blattfederelemente sind. Derartige Federelemente sind für die gewünschten Schwingbewegungen besonders vorteilhaft, da diese im Wesentlichen nur in eine Richtung federnd verbiegbar sind.

Die erste Anschlussvorrichtung kann eine Anschlussplatte zum Verbinden mit der Testvorrichtung aufweisen. Über die Anschlussplatte lässt sich die erste Anschlussvorrichtung auf einfache Art und Weise, beispielsweise durch Verschraubung mit der Testvorrichtung, verbinden. Zusätzlich können auch Passungen zur formschlüssigen Kraftübertragung vorgesehen werden.

Die zweite Anschlussvorrichtung kann eine Anschlussplatte oder ein Anschlusselement zum Verbinden mit dem Modell aufweisen, beispielsweise kann mittels der Anschlussplatte der zweiten Anschlussvorrichtung die erfindungsgemäße Federeinrichtung ebenfalls durch Verschrauben mit einer Anschlusseinrichtung des Modells verbunden werden. Alternativ kann auch ein Anschlusselement, beispielsweise ein in eine Anschlusseinrichtung des Modells einführbarer Konus vorgesehen sein. Insbesondere bei Nickbewegungen kann ein derartiges Anschlusselement von Vorteil sein, da einerseits die notwendigen Kräfte und Bewegungen in vorteilhafter Weise übertragen werden und andererseits eine schnelle Verbindung zwischen Federvorrichtung und Modell durch einfaches Ineinanderstecken erreicht werden kann.

Vorzugsweise ist vorgesehen, dass die zweite Anschlussvorrichtung einen an einem äußeren Rand der Anschlussplatte oder des Anschlusselements sich in Richtung der Mittelachse erstreckenden Vorsprung aufweist, der das Rotationselement bildet. Mit anderen Worten, die zweite Anschlussvorrichtung weist an ihrem äußeren Rand einen sich axial erstreckenden Vorsprung auf, der das Rotationselement bildet, so dass dieses in vorteilhafter Weise eine exzentrisch zu der Mittelachse verlaufende Rotationsachse aufweisen kann. Durch eine derartige Ausgestaltung der Anschlussvorrichtung ist darüber hinaus auf einfache Art und Weise eine Rotationsachse für die Schwingung bereitstellbar, die durch einen nahe an einer Modellseitenwand liegenden Schwerpunkt verläuft.

Die Rotationsachse kann beispielsweise parallel zu der Mittelachse verlaufen. Eine derartige Ausgestaltung ist für die Messung bei Rollbewegungen geeignet. Bei der Messung bei Rollbewegungen ist die Ausgestaltung der zweiten Anschlussvorrichtung mit einer Anschlussplatte, die beispielsweise mit dem Modell verschraubt wird, von Vorteil. Grundsätzlich ist auch das Vorsehen eines Anschlusselements möglich, wobei in diesem Fall eine Kraftübertragung in Umfangsrichtung, beispielsweise durch ein entsprechendes Zusammengreifen von Anschlusselement und Modell gewährleistet sein muss.

Alternativ verläuft die Rotationsachse orthogonal zu der Mittelachse. Mit anderen Worten, die Rotationsachse verläuft quer zu der Mittelachse mit einem Abstand zu dieser. Eine derartige Ausgestaltung der erfindungsgemäßen Federvorrichtung ist für die dynamischen Messungen bei Nickbewegungen geeignet.

In einem bevorzugten Ausführungsbeispiel der Erfindung ist vorgesehen, dass jeweils mindestens ein Dehnmessstreifen an den biegebeanspruchten Federelementen angeordnet ist. Über die Dehnmessstreifen lässt sich die Auslenkung und somit die Schwingbewegung in vorteilhafter Weise vermessen. Grundsätzlich können auch mehrere Dehnmesstreifen an jedem der biegebeanspruchten Federelementen angeordnet sein.

Die erfindungsgemäße Federvorrichtung kann ferner zwei Federeinrichtungen mit jeweils zwei biegebeanspruchten Federelementen aufweisen, wobei die Federeinrichtungen in Richtung der Rotationsachse voneinander beabstandet sind. Mit anderen Worten, die erfindungsgemäße Federvorrichtung kann zwei baugleiche Federeinrichtungen aufweisen, die voneinander beabstandet sind, wobei jeweils die ersten Enden der biegebeanspruchten Federelemente mit der ersten Anschlussvorrichtung verbunden sind und die jeweils zweiten Enden mit der zweiten Anschlussvorrichtung. Durch das Vorsehen von zwei Federeinrichtungen kann die Schwingbewegung stabilisiert werden, so dass sichergestellt wird, dass die Schwingbewegung ausschließlich bzw. nahezu ausschließlich um die Rotationsachse erfolgt.

Die Erfindung sieht ferner eine Windkanaltestvorrichtung zur Ermittlung von dynamischen Beiwerten an einem Windkanalmodell vor, die ein Windkanalmodell und eine Testvorrichtung mit einer Auslösevorrichtung aufweist, wobei das Windkanalmodell auf einer von einer Anströmseite abgewandten Seite eine Anschlussaussparung aufweist, in der eine Anschlusseinrichtung angeordnet ist, wobei die Auslösevorrichtung über eine erfindungsgemäße Federvorrichtung mit der Anschlusseinrichtung verbunden ist, wobei die Testvorrichtung ferner eine Auslenkeinrichtung aufweist, über die das Windkanalmodell relativ zu der Testvorrichtung aus einer Halteposition in einer Auslenkrichtung entgegen einer Federkraft der Federvorrichtung in eine Auslenkposition bewegbar ist, wobei in der Auslenkposition die Auslösevorrichtung das Windkanalmodell zur Schwingung um die Federvorrichtung freigibt.

Die erfindungsgemäße Windkanaltestvorrichtung zur Ermittlung von dynamischen Beiwerten ermöglicht in vorteilhafter Weise, dass das Windkanalmodell in eine Schwingung um die Rotationsachse der Federvorrichtung freigegeben wird, so dass die dynamischen Beiwerte bestimmbar sind. Durch das Vorsehen einer Anschlussaussparung, in der die Anschlusseinrichtung angeordnet ist und mit der die Auslösevorrichtung über die Federvorrichtung verbunden ist, kann das Windkanalmodell in vorteilhafter Weise flexibel eingesetzt werden, da mit der Anschlusseinrichtung unterschiedlich konfigurierte Federvorrichtungen verbunden werden können oder auch eine Kraftmesswaage zur Bestimmung statischer Beiwerte. Hierfür kann insbesondere vorgesehen sein, dass die Anschlussaussparung an die Abmessungen an der Kraftmesswaage zur Bestimmung statischer Beiwerte angepasst ist.

Dadurch kann die erfindungsgemäße Windkanaltestvorrichtung eingesetzt werden, um mit einem Windkanalmodell unterschiedliche Beiwerte zu bestimmen. Ferner kann durch die Verwendung der Windkanaltestvorrichtung mit der erfindungsgemäßen Federvorrichtung in vorteilhafter Weise die Bestimmung der dynamischen Beiwerte auch in Anwendungsfällen, bei denen ein exzentrischer Schwerpunkt beim Windkanalmodell vorliegt, erfolgen.

Im Folgenden wird unter Bezugnahme auf die nachfolgenden Figuren die Erfindung näher erläutert.

Es zeigen:
- Figur 1: eine schematische Darstellung eines Erstausführungsbeispiels einer erfindungsgemäßen Federvorrichtung,
- Figur 2: eine schematische Darstellung einer erfindungsgemäßen Windkanaltestvorrichtung mit der in Figur 1 dargestellten Federvorrichtung und
- Figur 3: ein zweites Ausführungsbeispiel einer erfindungsgemäßen Federvorrichtung.

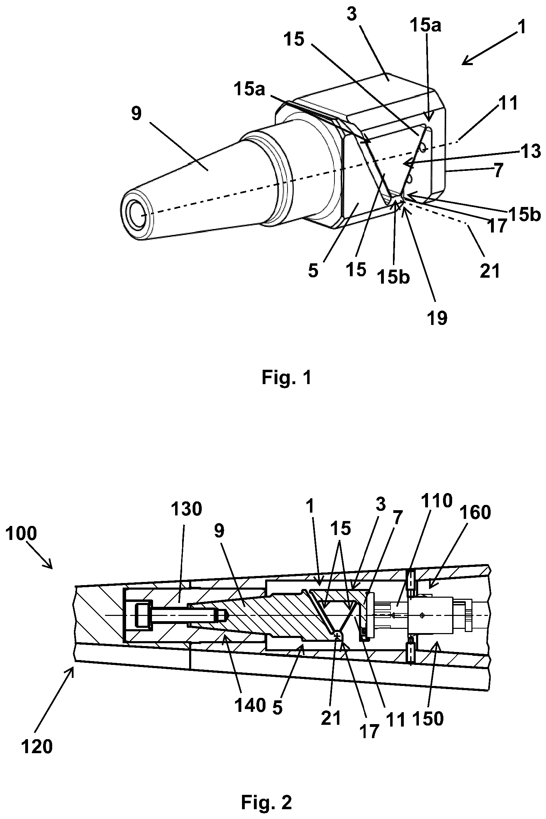

In Figur 1 ist eine erfindungsgemäße Federvorrichtung 1 für Schwingbewegungen von Modellen schematisch dargestellt.

Die Federvorrichtung 1 weist eine erste Anschlussvorrichtung 3 und eine zweite Anschlussvorrichtung 5 auf. Wie am besten aus Figur 2 ersichtlich ist, in der eine erfindungsgemäße Windkanaltestvorrichtung 100 schematisch dargestellt ist, kann die erfindungsgemäße Federvorrichtung 1 mittels der ersten Anschlussvorrichtung 3 mit einer Testvorrichtung 110 der Windkanaltestvorrichtung 100 und zweiten Anschlussvorrichtung 5 mit einem Modell 120 verbunden werden.

Dazu weist die erste Anschlussvorrichtung 3 eine Anschlussplatte 7 auf, über die die Federvorrichtung 1 mit der Testvorrichtung 110 verschraubbar ist.

Die zweite Anschlussvorrichtung 5 weist ein Anschlusselement 9 auf, das in das Modell 120 einsteckbar ist.

Die Federvorrichtung 1 weist ferner eine Mittelachse 11 und eine Federeinrichtung 13 auf. Die Federeinrichtung 13 weist zwei biegebeanspruchte Federelemente 15 auf, über die die erste Anschlussvorrichtung 3 mit der zweiten Anschlussvorrichtung 5 verbunden ist.

Die zweite Anschlussvorrichtung 5 weist an ihrem in radialer Richtung äußeren Ende einen Vorsprung 19 auf, der sich parallel zu der Mittelachse 11 erstreckt. An dem Vorsprung 19 ist ein Rotationsachsenelement 17 gebildet. Die ersten Enden 15a der biegebeanspruchten Federelemente 15 sind in axialer Richtung voneinander beabstandet an der ersten Anschlussvorrichtung 3 angebracht. Die zweiten Enden 15b der biegebeanspruchten Federelemente sind mit dem Rotationsachsenelement 17 der zweiten Anschlussvorrichtung 5 verbunden. Das Rotationsachsenelement 17 bildet eine Rotationsachse 21, um die eine relative Bewegung zwischen der ersten und der zweiten Anschlussvorrichtung 3,5 erfolgen kann.

Die Rotationsachse 21 verläuft quer zu der Mittelachse 11 und exzentrisch von dieser. Somit ist die in Figur 1 dargestellte Federvorrichtung 1 in vorteilhafter Weise für Messungen bei Nickbewegungen und exzentrischer Schwerpunktlage einsetzbar.

Die biegebeanspruchten Federelemente 15 sind als Blattfederelemente ausgebildet, an denen nicht dargestellte Dehnmesstreifen angebracht sind, über die die Biegung der biegebeanspruchten Federelemente 15 messbar ist

In Figur 2 ist die in Figur 1 dargestellte erfindungsgemäße Federvorrichtung 1 im in einer Windkanaltestvorrichtung 100 eingebauten Zustand gezeigt. Die Federvorrichtung 1 ist mit der ersten Anschlussvorrichtung 3 mit einer Testvorrichtung 110 verbunden. Das Anschlusselement 9 der zweiten Anschlussvorrichtung 5 ist mit einer Anschlusseinrichtung 130 des Windkanalmodells 120 verbunden. Die Anschlusseinrichtung 130 ist in einer Anschlussaussparung 140 des Windkanalmodells angeordnet. In der Anschlussaussparung 140 ist, in mit dem Windkanalmodell 120 verbundenem Zustand, auch die Federvorrichtung 1 angeordnet.

Die Testvorrichtung 110 weist ferner eine Auslenkeinrichtung 150 und eine Auslösevorrichtung 160 auf. Über die Auslenkeinrichtung 150 kann das Windkanalmodell 120 relativ zu der Testvorrichtung 110 aus einer Halteposition in eine Auslenkposition bewegt werden, wobei die Bewegung entgegen der Federkraft der Federvorrichtung 1 erfolgt. In der nun vorliegenden Auslenkposition kann das Windkanalmodell 120 über die Auslösevorrichtung 160 zum Schwingen um die erfindungsgemäße Federvorrichtung 1 freigegeben werden. Die Schwingung des Windkanalmodells 120 erfolgt um die Rotationsachse 21.

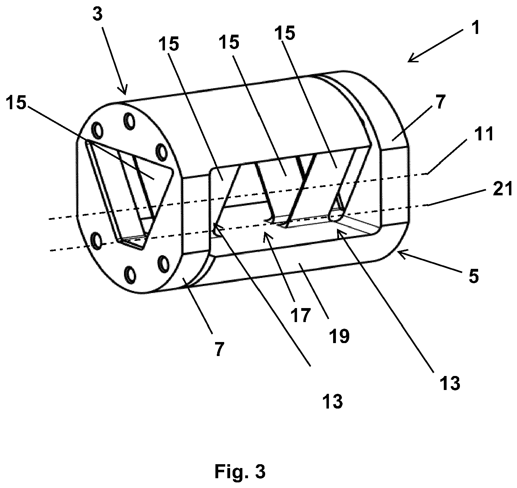

In Figur 3 ist ein zweites Ausführungsbeispiel der erfindungsgemäßen Federvorrichtung schematisch dargestellt.

Bei dem in Figur 3 dargestellten Ausführungsbeispiel verläuft die Rotationsachse 21 exzentrisch zu der Mittelachse 11 und parallel zu dieser. Somit ist die erfindungsgemäße Federvorrichtung 1 für Rollbewegungen geeignet. Ferner weist die in Figur 3 dargestellte erfindungsgemäße Federvorrichtung 1 zwei Federeinrichtungen 13 auf, die jeweils zwei biegebeanspruchte Federelemente 15 umfassen. Die Federeinrichtungen 13 sind in axialer Richtung voneinander beabstandet angeordnet und weisen den gleichen Aufbau auf.

Die in Figur 3 dargestellte erfindungsgemäße Federvorrichtung 1 weist ferner anstelle des Anschlusselements 9 des Ausführungsbeispiels der Figur 1 an der zweiten Anschlussvorrichtung 5 ebenfalls eine Anschlussplatte 7 auf. Die in Figur 3 dargestellte erfindungsgemäße Federvorrichtung 1 kann auf unterschiedliche Weisen in einer Windkanaltestvorrichtung eingesetzt werde. Beispielsweise kann die Federvorrichtung 1 über die Anschlussplatte 7 der zweiten Anschlussvorrichtung 5 mit dem Modell verbunden werden und über die Anschlussplatte 7 der ersten Anschlussvorrichtung 3 mit der Testvorrichtung oder über die Anschlussplatte 7 der zweiten Anschlussvorrichtung 5 mit der Testvorrichtung verbunden werden und über die Anschlussplatte 7 der ersten Anschlussvorrichtung 3 mit dem Modell. Die Anschlussplatten 7 der ersten und der zweiten Anschlussvorrichtung 3,5 können gleich ausgebildet sein, so dass die Federvorrichtung 1 in beliebiger Richtung verwendet werden kann. In den Anschlussplatten können Aussparungen und bei Modell und Testvorrichtung entsprechende Vorsprünge zur Ausbildung von Passungen vorgesehen sein. Die Federvorrichtung 1 kann beispielsweise außerdem über Schrauben mit dem Modell und der Testvorrichtung verbunden werden. Dadurch können die bei der Rollbewegung in Umfangsrichtung auftretenden Kräfte in vorteilhafter Weise form- und kraftschlüssig übertragen werden.

Die Anschlussplatten 7 können über Zwischenelemente mit dem Modell 120 und der Testvorrichtung 110 verbunden werden, wobei sich ein Winkel zwischen der Mittelachse von Modell und Testvorrichtung und der Rotationsachse ergibt. Dadurch ist es möglich, dynamische Tests um in gewissen Grenzen beliebig orientierte Rotationsachsen durchzuführen, obwohl die Testvorrichtung mittig im Modell orientiert verbleibt. Für einige Anwendungsfälle wird dadurch die Durchführung der dynamischen Tests überhaupt erst möglich.

### Bezugszeichenliste

- 1: Federvorrichtung
- 3: erste Anschlussvorrichtung
- 5: zweite Anschlussvorrichtung
- 7: Anschlussplatte
- 9: Anschlusselement
- 11: Mittelachse
- 13: Federeinrichtung
- 15: Federelemente
- 15a: erste Enden
- 15b: zweite Enden
- 17: Rotationsachsenelement
- 19: Vorsprung
- 21: Rotationsachse
- 100: Windkanaltestvorrichtung
- 110: Testvorrichtung
- 120: Modell
- 130: Anschlusseinrichtung
- 140: Anschlussaussparung
- 150: Auslenkeinrichtung
- 160: Auslösevorrichtung

## Patentansprüche

1. Federvorrichtung (1) für Schwingbewegungen von Modellen, vorzugsweise Windkanalmodellen,
mit einer ersten Anschlussvorrichtung (3) zum Verbinden mit einer Testvorrichtung (110) und einer zweiten Anschlussvorrichtung (5) zum Verbinden mit einem Modell (120),
mit einer Mittelachse (11),
und mit mindestens einer Federeinrichtung (13) mit zwei biegebeanspruchten Federelementen (15), die mit ersten Enden (15a) mit der ersten Anschlussvorrichtung verbunden sind und mit zweiten Enden mit der zweiten Anschlussvorrichtung, wobei die ersten Enden (15a) voneinander beabstandet an der ersten Anschlussvorrichtung (3) angebracht sind und die zweiten Enden (15b) mit einem Rotationsachsenelement (17) der zweiten Anschlussvorrichtung (5) verbunden sind,
wobei das Rotationsachsenelement (17) eine Rotationsachse (21) für eine relative Bewegung zwischen der ersten und der zweiten Anschlussvorrichtung (3,5) bildet, wobei die Rotationsachse (21) exzentrisch zu der Mittelachse (11) verläuft.

2. Federvorrichtung nach Anspruch 1, **dadurch gekennzeichnet, dass** die biegebeanspruchten Federelemente (15) Blattfederelemente sind.

3. Federvorrichtung nach Anspruch 1 oder 2, **dadurch gekennzeichnet, dass** die erste Anschlussvorrichtung (3) eine Anschlussplatte (7) zum Verbinden mit der Testvorrichtung (110) aufweist.

4. Federvorrichtung nach einem der Ansprüche 1 bis 3, **dadurch gekennzeichnet, dass** die zweite Anschlussvorrichtung (5) eine Anschlussplatte (7) oder ein Anschlusselement (9) zum Verbinden mit dem Modell (120) aufweist.

5. Federvorrichtung nach Anspruch 4, **dadurch gekennzeichnet, dass** die zweite Anschlussvorrichtung (5) einen an einem äußeren Rand der Anschlussplatte (7) oder des Anschlusselements (9) sich in Richtung der Mittelachse (11) erstreckenden Vorsprung (19) aufweist, der das Rotationsachsenelement (17) bildet.

6. Federvorrichtung nach einem der Ansprüche 1 bis 5, **dadurch gekennzeichnet, dass** die Rotationsachse (21) parallel zu der Mittelachse (11) verläuft.

7. Federvorrichtung nach einem der Ansprüche 1 bis 5, **dadurch gekennzeichnet, dass** die Rotationsachse (21) orthogonal zu der Mittelachse (11) verläuft.

8. Federvorrichtung nach einem der Ansprüche 1 bis 7, **dadurch gekennzeichnet, dass** jeweils mindestens ein Dehnmessstreifen an den biegebeanspruchten Federelementen (15) angeordnet ist.

9. Federvorrichtung nach einem der Ansprüche 1 bis 8, **gekennzeichnet durch** zwei Federeinrichtungen (13) mit jeweils zwei biegebeanspruchten Federelementen (15), wobei die Federeinrichtungen (13) in Richtung der Rotationsachse (21) voneinander beabstandet sind.

10. Windkanaltestvorrichtung (100) zur Ermittlung von dynamischen Beiwerten an einem Windkanalmodell (120),
mit einem Windkanalmodell (120) und mit einer Testvorrichtung (110) mit einer Auslösevorrichtung (160),
wobei das Windkanalmodell (120) auf einer von einer Anströmseite abgewandten Seite eine Anschlussaussparung (140) aufweist, in der eine Anschlusseinrichtung (130) angeordnet ist, wobei die Auslösevorrichtung (160) über eine Federvorrichtung (1) gemäß einem der Ansprüche 1 bis 9 mit der Anschlusseinrichtung (130) verbunden ist,
wobei die Testvorrichtung (110) ferner eine Auslenkeinrichtung (150) aufweist, über die das Windkanalmodell (120) relativ zu der Testvorrichtung (110) aus einer Halteposition in eine Auslenkrichtung und entgegen einer Federkraft der Federvorrichtung (1) in eine Auslenkposition bewegbar ist, wobei in der Auslenkposition die Auslösevorrichtung (160) das Windkanalmodell (120) zum Schwingen um die Federvorrichtung (1) freigibt.
